# EUROPEAN PATENT SPECIFICATION

(11) **EP 4 083 485 B1**
(45) Date of publication and mention of the grant of the patent: **02.12.2026**
(21) Application number: 22171099.9
(22) Date of filing: 02.05.2022
(51) Int. Cl.: F16L 15/00, F16L 15/08, F16L 21/02, F16L 47/16, F16L 1/036, F16L 1/038

(54) **PIPE STRING FOR TRENCHLESS INSTALLATION**
ROHRSTRANG FÜR EINE GRABENLOSE INSTALLATION
TRAIN DE TIGES POUR UNE INSTALLATION SANS TRANCHÉE

(30) Priority: 30.04.2021 NL 2028107
(43) Date of publication of application: 02.11.2022
(73) Proprietor: Dyka B.V., 8331 LJ Steenwijk (NL)
(72) Inventor: NOOTENBOOM, Dirk Cornelis, 3176 PR POORTUGAAL (NL)
(74) Representative: Arnold & Siedsma

(56) References cited:
- EP-A1- 3 101 324
- WO-A1-2005/116511
- CA-A1- 2 201 221
- FR-A1- 2 728 051
- RU-C1- 2 231 616
- US-B1- 6 604 761

## Description

### BACKGROUND

The invention relates to a pipe string for trenchless installation. Furthermore, the invention relates to a method for trenchless installation of a pipe string.

Such a pipe string for trenchless installation is well-known. The known pipe string comprises a plurality of pipes with a length, for example, of 20 meters, which are welded to each other on an installation site in order to form a pipe string with a desired length, for example, of 2000 meters. After the pipe string has been formed, the pipe string is jacked into soil in order to install the pipe string in a trenchless manner.

WO 2005/116511 is considered to be prior art, describing a threaded pipe joint coupling with wire lock system made of polyvinyl chloride comprising two pipe joining components (19,20), two sealing rings (13,22), including a wire lock (39), said wire lock (39) being inserted into a groove (12,42) which locks the coupling (20) and the end of one pipe joint, said coupling joining both ends of the pipes using threads, said threads (3, 14), made in the form of squares and said sealing rings (22) are fixed to both ends of the pipes (19) and the coupling (20).

### SUMMARY OF THE INVENTION

A disadvantage of the known pipe string is that the pipe string is constructed on the installation site before being inserted into the soil, such that the pipe string at the installation site has a length, for example, of 700 up to 2000 meters. The welding of the plurality of pipes to each other has to be performed before installation of the pipe string in order to be able to remove welding beads formed at the inside of the pipes during welding, as removing welding beads over a distance of 200 meters or more is nearly impossible. As a result, the installation site also needs to have a length of at least 700 up to 2000 meters in order to be able to accommodate the pipe string. This is disadvantageous, since this results in nuisance to the surroundings of the installation site and/or since there might be a lack of space to realize an installation site for constructing the pipe string, in particular in urban environments.

It is an object of the present invention to ameliorate or to eliminate one or more disadvantages of the known pipe string, to provide an improved pipe string or to at least provide an alternative pipe string.
According to a first aspect, the invention provides a pipe string for trenchless installation, according to the independent claim 1.

The pipe string according to the invention allows one of the first and second pipes to be installed firstly, for example, within a pre-formed underground cavity, for example formed by horizontal directional drilling. Secondly, the other one of the first and seconds pipe may be placed against and coupled to the first pipe by means of the pipe coupling assembly, whereafter the second pipe may be installed within the pre-formed underground cavity. When the pipe string is completely installed within the underground cavity, the pipe string has the desired length, for example, of 700 up to 2000 meters. Since the first and second pipes of the pipe string are installed sequentially within the underground cavity, the installation site needed for installation of the pipe string advantageously only needs a length sufficient for accommodating the first and second pipes, which is much shorter than the total length of the pipe string. Advantageously, less space is required for trenchless installation of the pipe string such that less nuisance to the surroundings is generated and it becomes easier to obtain a permit.

Additionally, connecting the first and second pipe coupling to the first and second pipe end section, respectively, allows the external screw thread to be achieved while maintaining the wall thickness, strength and smooth inner wall surface of the first and second pipes, in particular the first and second pipe end sections thereof.

The pipe coupling assembly according to the invention allows the second pipe with the second pipe coupling to be installed within the pre-formed underground cavity, whereafter the coupling sleeve is screwed onto the first pipe coupling over its entire length. Subsequently, the first pipe coupling connected to the first pipe may be placed against the second pipe coupling, whereafter the coupling sleeve is screwed back partially onto the second pipe coupling. In embodiments wherein the second pipe coupling comprises an abutment body, as described herein, the coupling sleeve is screwed back until the coupling sleeve abuts against the abutment body. This is advantageous, as the pipe coupling assembly according to the invention allows the pipe couplings to be connected snugly in a relatively easy manner.

In an embodiment, the first and second circumferential walls of the first and second pipe couplings are made of a plastic that can be fused with itself, preferably PVC or a polyolefin, more preferably PVC, PE or PP. In an embodiment thereof, the first and second circumferential walls of the first and second pipe couplings are made of HDPE, preferably PE-80 or PE-100, most preferably PE-100.

In an embodiment, the third circumferential wall of the coupling sleeve is made of the same plastic as the first circumferential wall and/or the second circumferential wall.

In an embodiment, the third circumferential wall of the coupling sleeve is made of a different material than the first the second circumferential walls of the first and/or second pipe couplings. The inventors have surprisingly found that providing a coupling sleeve made of another material than the first and second pipe couplings may result in a coupling sleeve that is able to withstand a relatively high tensile force, for example, of 5 tons.

In an embodiment thereof, the third circumferential wall is made of a plastic, plastic composite material or plastic reinforced with a composite layer. In an embodiment thereof, the third circumferential wall is made of a plastic composite material comprising fibers embedded in a polymer matrix, preferably wherein the fibers are selected from a group comprising glass, carbon, aramid, basalt, paper, wood and coconut, and the polymer matrix is selected from the group comprising epoxy, vinyl ester, polyester, polyolefin and polyamide. In an alternative embodiment thereof, the third circumferential wall is made of polyamide (PA), polyvinylchloride (PVC) or a polyolefin, preferably PA or polyethylene (PE), in particular PE-100, PE-80 or PA-6. Manufacturing a coupling sleeve which is able to withstand a predetermined tensile force from polyamide (of which the mechanical properties are better in comparison with for example PE), results in a coupling sleeve with smaller dimensions in comparison with a coupling sleeve made from PE.

In an embodiment, the first and second pipe end sections comprise a plastic circumferential wall made of a plastic that can be fused with itself, preferably PVC or a polyolefin, more preferably PVC, PE or PP. In an embodiment thereof, the plastic circumferential wall of the first and second pipe end sections is made of HDPE, preferably PE-80 or PE-100, most preferably PE-100. The inventors have found that such materials result in a reliable and durable pipe string.

In an embodiment, the first and second pipe end sections are fused to the first and second pipe couplings respectively. Preferably the first pipe end section is welded to the first pipe coupling, and the second pipe end section is welded to the second pipe coupling. Welding the first and second pipe coupling to the first and second pipe end sections, respectively, allows advantageously the first and second pipe coupling to be made of a different material than the material of the first and second pipes, in particular the first and second pipe end sections thereof.

Additionally, welding the first and second pipe coupling to the first and second pipe end section, respectively, allows advantageously the external screw thread to be achieved while maintaining the wall thickness, strength and smooth inner wall surface of the first and second pipes, in particular the first and second pipe end sections thereof.

In an embodiment, the first and/or second pipe comprise one or more sub-pipes fused, preferably welded, to each other in order to form the first and/or second pipe.

In an embodiment, the first internal screw thread continues, in particular substantially uninterrupted, into the second internal screw thread. In an embodiment thereof, the second pipe coupling comprises an abutment body that extends around the second circumferential wall, wherein the abutment body comprises a distal abutment surface that faces the coupling sleeve and that is in abutment therewith. In an embodiment thereof, the abutment body comprises an oblique outer surface that tapers in a direction away from the coupling sleeve. In an even further embodiment thereof, the second pipe has an outer diameter and the outer diameter of the abutment body is at most 120% of the outer diameter of the second pipe.

In an embodiment, the tensile strength of the pipe string determined at the position of the pipe coupling assembly is such that it can withstand a pull force of more than 100 kN, preferably more than 250 kN, more preferably more than 500 kN without breaking or disconnecting the assembly. The inventors have surprisingly found that the pipe string according to this inventions allows the provision of a pipe string which is easy to assemble and has enough tensile strength to resist the jacking/pulling forces during trenchless installation.

In an embodiment, the pipe coupling assembly comprises one or more rubber seals, preferably a rubber seal placed such that when the pipe coupling is assembled, a seal is obtained which is water-tight at an internal water pressure of at least 2 bar.
According to a second aspect, the inventions provides a method for trenchless installation of a pipe string, according to the independent claim 13

In the context of the present application, placing one of the first plastic pipe and the second plastic pipe in a pre-formed underground cavity by jacking or pulling has to be understood as including the use of a pilot rod provided at the leading end of the first plastic pipe or the second plastic pipe.

According to the second aspect of the invention, step (iii) comprises coupling the first pipe and the second pipe to each other by means of a pipe coupling assembly,
wherein the first pipe comprises a first pipe end section that is connected with a first pipe coupling of the pipe coupling assembly, and wherein the second pipe comprises a second pipe end section that is connected with a second pipe coupling of the pipe coupling assembly,
wherein the first pipe coupling comprises a plastic first circumferential wall that is provided with a first external screw thread, and wherein the second pipe coupling comprises a plastic second circumferential wall that is provided with a second external screw thread,
wherein the pipe coupling assembly comprises a coupling sleeve for coupling the first pipe coupling with the second pipe coupling,
wherein the coupling sleeve comprises a plastic third circumferential wall that is provided with a first internal screw thread that mates with the first external screw thread of the first pipe coupling, and a second internal screw thread that mates with the second external screw thread of the second pipe coupling, and
wherein the first pipe coupling has a first length and the coupling sleeve has a second length, wherein the first length is equal to or larger than the second length. Step (iii) comprises the following steps: screwing the coupling sleeve, over its entire length, onto the first pipe coupling;
placing the first plastic pipe against the second plastic pipe, such that the first pipe coupling is placed against the second pipe coupling; and
screwing the coupling sleeve back partially onto the second pipe coupling from the first pipe coupling.

In an embodiment, at least one of the first pipe and the second pipe has a length of more than 50m, or even more than 100m, and/or wherein at least one of the first pipe and the second pipe comprise multiple sub-pipes connected to each other in order to form the respective pipe.

The various aspects and features described and shown in the specification can be applied, individually, wherever possible, as long as they within the scope of the claims.

### BRIEF DESCRIPTION OF THE DRAWINGS

The invention will be elucidated on the basis of an exemplary embodiment shown in the attached drawings, in which:
Figures 1A and 1B are an isometric view and a cross section of two pipes that are coupled to each other by means of a pipe coupling assembly according to the invention;
Figures 2A and 2B are an isometric view and a cross section of a first pipe coupling and a second pipe coupling of the pipe coupling assembly of figures 1A and 1B; and
Figures 3A and 3B are an isometric view and a cross section of a coupling sleeve of the pipe coupling assembly of figures 1A and 1B.

### DETAILED DESCRIPTION OF THE INVENTION

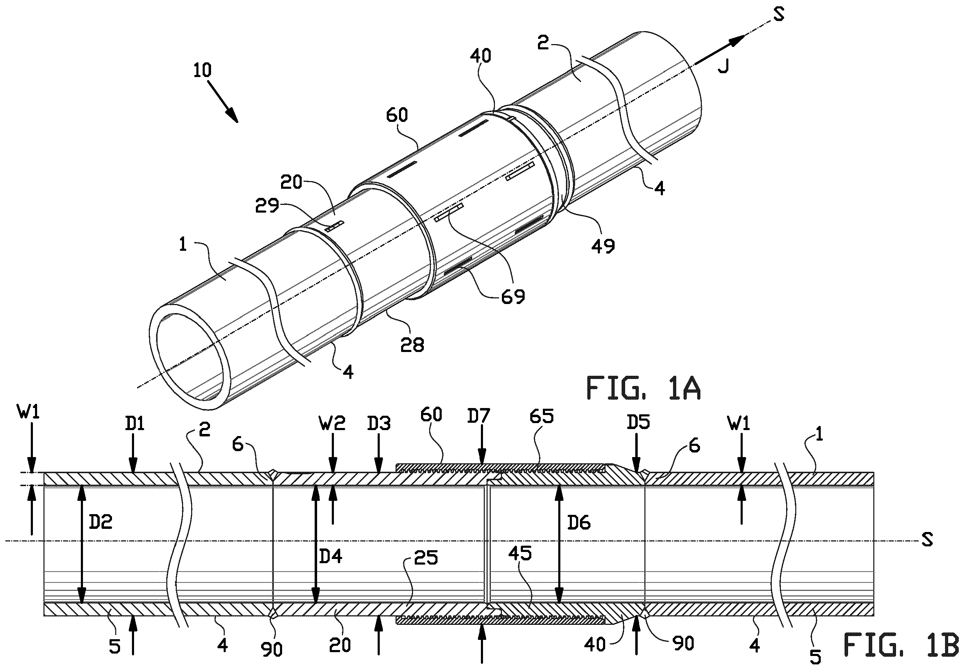

Figures 1A and 1B show the meeting ends of a first pipe 1 and a second pipe 2 that are coupled to each other by means of a pipe coupling assembly 10 according to an embodiment of the invention. The pipes 1, 2 are made from plastic and are part of a pipe string having multiple coupled plastic pipes. This plastic pipe string is designed for trenchless installation and can be jacked or pulled in into a pre-formed underground cavity, such as a substantially horizontal bore channel obtained by directional boring or horizontal directional drilling, in an insert direction J parallel to the center line S of the pipe string. The underground cavity is typically formed by drilling in soil, but drilling may also be performed in other substrates like rock or concrete.

The plastic pipes 1, 2 used to form the pipe string are typically the type of pipes referred to as "jacking pipes", which are strong pipes that can resist the large forces exerted during jacking or pulling, characterized by having a large wall thickness and being made of an appropriate polymer, as described herein in more detail elsewhere.

Each of the pipes 1, 2 comprises a pipe end section 4 having a cylindrical circumferential wall 5 with a radius that is preferably constant around the center line S. The pipe wall 5 has an outer diameter D1, an inner diameter D2 and a wall thickness W1 that are preferably constant along the center line S. The pipe wall 5 is made of a plastic that can be fused with itself. A beveled surface 7 is provided at the end of the pipe wall 5 facing towards the pipe coupling assembly 10.

Fusing of plastics is known to the skilled person and comprises techniques such as gluing and plastic welding. Preferred fusing techniques for use in the context of the present invention are welding techniques, as these are capable of providing a joint strong enough to enable trenchless installation of the pipe string. Preferred welding techniques comprise solvent welding for example for PVC, extrusion welding, hot-plate welding.

Plastics which are suitable for constructing pipes for trenchless applications because of their low cost and good mechanical properties, and which can easily be fused with itself are plastics employing polyvinylchloride (PCV) or a polyolefin such as polyethylene (PE) or polypropylene (PP) as the base polymer. Hence, the circumferential wall 5 of the pipe end sections 4 of the pipes 1, 2 is preferably made of PVC or a polyolefin, more preferably PVC, PE or PP. Particularly preferred are HDPE plastics, such as PE-80 or PE-100. Furthermore, the pipes 1, 2 employed to form the pipe string preferably have a smooth inner surface.

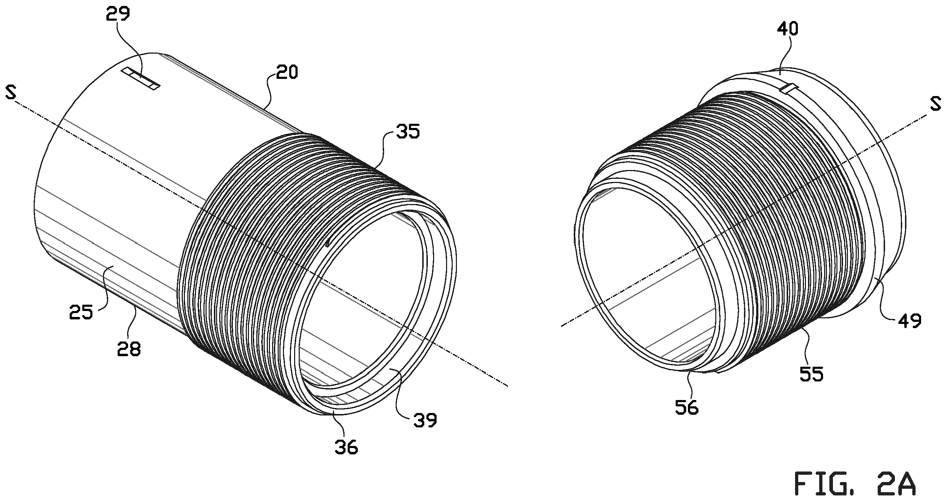

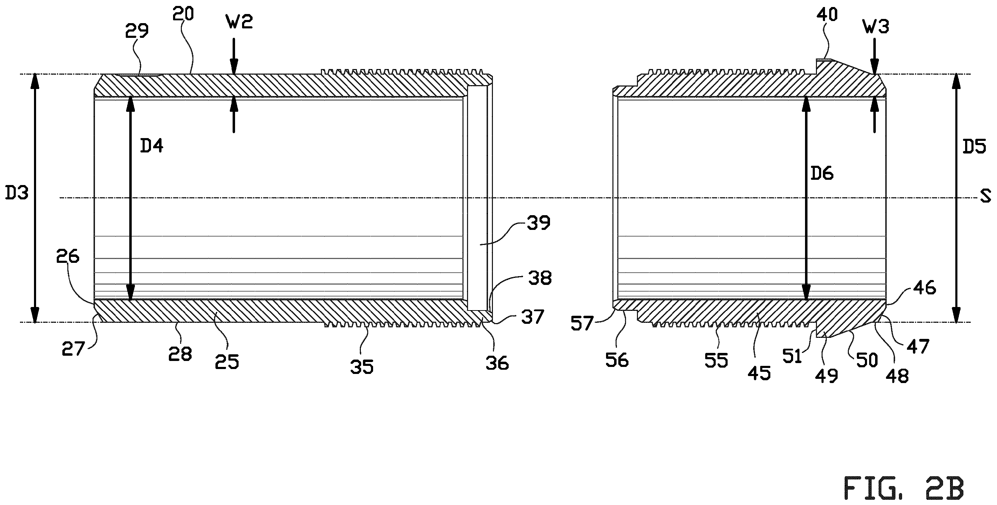

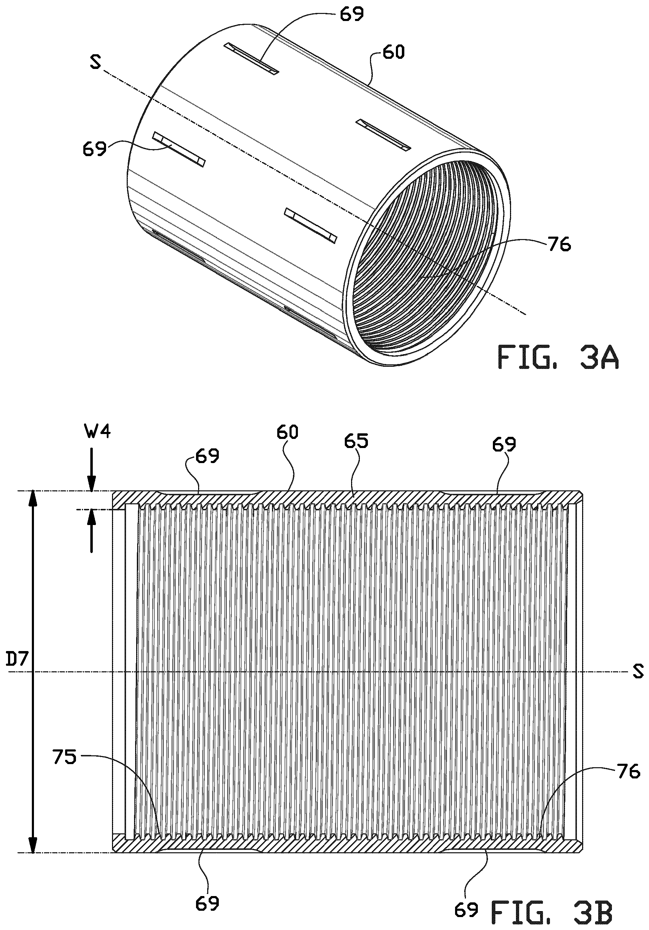

The pipe coupling assembly 10 comprises a first pipe coupling 20 as part of the first pipe 1, a second pipe coupling 40 as part of the second pipe 2, and a coupling sleeve 60 that couples the first pipe coupling 20 with the second pipe coupling 40. In figures 2A and 2B the first pipe coupling 20 and the second pipe coupling 40 are shown separate from the pipe end sections 4 and uncoupled from each other. Figures 3A and 3B show the coupling sleeve 60 separate from the first pipe coupling 20 and the second pipe coupling 40.

The first pipe coupling 20 comprises a cylindrical first circumferential wall 25 with a radius that is constant around the center line S. The first circumferential wall 25 has at the side of the connected pipe end section 4 an outer diameter D3, an inner diameter D4 and a wall thickness W2 that all correspond with the outer diameter D1, the inner diameter D2 and the wall thickness W1 of the connected pipe section 4 of the first pipe 1. The first circumferential wall 25 may form a unitary piece with the circumferential wall 5 of the first pipe 1, for example because the first pipe coupling 20 and the first pipe 1 were extruded as a single piece. Alternatively, and preferably, the first pipe coupling 20 is fused to the first pipe 1. The fusion technique is preferably a weld technique, as has been described herein above.

The first circumferential wall 25 has a proximal annular abutment surface 26 that extends perpendicular to the center line S, and that merges outwards into a proximal beveled surface 27, as shown in figure 2B. The proximal annular abutment surface 26 and the proximal beveled surface 27 are provided in order to avoid an internal weld seam. Such an abutment surface 26 is preferred when an extrusion weld is employed to connect the pipe 1 with the first pipe coupling 20.

Alternatively, the first circumferential wall 25 may simply have a proximal annular abutment surface that extends perpendicular to the center line S. In case a hot plate weld is employed to connect the pipe 1 with the first pipe coupling 20, it is preferable that the complete proximal annular abutment surface extends perpendicular to the center line S, i.e. without having a beveled surface.

The first pipe coupling 20 with particular preference has a first length in the direction of the center line S, and the coupling sleeve 60 has a second length in the direction of the center line S. The first length is equal to or greater than the second length. Since the first length is equal to or larger than the second length, the coupling sleeve 60, during installation, is enabled to be screwed over its complete length onto the first pipe coupling 20 without overlapping with the pipe 1. This is an important advantage since if the coupling sleeve 60 would overlap with the pipe 1 when it is screwed over its complete length onto the first pipe coupling 20, it is prone to jam due to (i) an external weld seam on the interface between pipe 1 and the first pipe coupling 20, which would have to be removed, or (ii) a variable outer diameter of the pipe 1, which are typically manufactured with a larger variability than is required for the first pipe coupling 20.

The first circumferential wall 25 is provided with a first external screw thread 35 having multiple windings. As shown in figure 2B, the first circumferential wall 25 has a circumferentially extending outer surface 28 without screw thread, that extends over a part of the length of the first pipe coupling 20 in the direction of the center line S. The outer surface 28 without screw thread extends over about half of the length of the first pipe coupling 20 in the direction of the center line S, as is shown in figure 2B.

Alternatively, the outer surface 28 without screw thread extends over 40-60% of the length of the first pipe coupling 20 in the direction of the center line S or the screw thread 35 may run over the entire length of the first pipe coupling 20 in the direction of the center line S.

The windings have a trapezoidal cross section as is shown in figure 2B, but may also have any other cross section, forming for example a square or buttress screw thread.

The first circumferential wall 25 comprises a distal receiving edge 36 forming an internal receiving rabbet 39, the distal receiving edge 36 having a beveled outer edge 37 and a beveled guiding edge 38 towards the internal receiving rabbet 39, as is shown in figure 2B. It was found that such a distal receiving edge 36 may be useful for accommodating a rubber seal for granting water tightness to the pipe coupling assembly and/or for aligning oval deformation of pipe couplings 20 and 40.

The second pipe coupling 40 comprises a cylindrical second circumferential wall 45 with a radius that is constant around the center line S. The second circumferential wall 45 has at the side facing towards the connected pipe end section 4 an outer diameter D5, an inner diameter D6 and a wall thickness W3 that all correspond with the outer diameter D1, the inner diameter D2 and the wall thickness W1 of the connected pipe end section 4 of the second pipe 2. In highly preferred embodiments the outer diameters, inner diameters, and wall thickness of pipes 1 and 2 are the same.

The second circumferential wall 45 has an proximal annular abutment surface 46 that extends perpendicular to the center line S, and that merges outwards into a proximal beveled surface 47, as shown in figure 2B. In case an extrusion weld is employed to connect the pipe 2 with the second pipe coupling 40, the second circumferential wall 45 having a proximal annular abutment surface 46 that extends perpendicular to the center line S and that merges outwards into a proximal beveled surface 47, avoids an internal weld seam.

Alternatively and not shown, the second circumferential wall 45 may have a proximal annular abutment surface that extends perpendicular to the center line S. In case a hot plate weld is employed to connect the pipe 2 with the first pipe coupling 40, it is preferable that the complete proximal annular abutment surface extends perpendicular to the center line S, i.e. without having the beveled surface 47.

The second circumferential wall 45 has a circumferentially extending outer surface 48 without screw thread and a circumferentially extending, raised abutment body 49 at the end facing the pipe end section 4 of the second pipe 2. The outer diameter of the raised abutment body 49 is at most 120% of the outer diameter D5. Figure 2B shows an outer surface 48 without screw thread which extends only a few millimeters in the direction of the center line S and which has a raised abutment body 49. The abutment body 49 has an oblique outer surface 50 that tapers in the direction towards the proximal abutment surface 46 and that merges into the outer surface 48. At the opposite side the abutment body 49 has an annular distal abutment surface 51 that extends perpendicular to the center line S. The second circumferential wall 45 is provided with a second external screw thread 55 having multiple windings with a cross section that corresponds with the external first screw thread 35. The windings preferably have a trapezoidal cross section as is shown in the drawings, but may also have any other cross section, forming for example a square or buttress screw thread.

The second pipe coupling 40 has a distal insert reduction 56 that fits inside the receiving rabbet 39 of the first pipe coupling 20. The distal insert reduction 56 has a beveled guiding edge 57, as is shown in figure 2B.

The first pipe coupling 20 further comprises a tool provision to attach tools thereon. These are in this example elongate blind grooves 29 that extend in the first circumferential wall 25 in the direction of the center line S.

The first circumferential wall 25 and the second circumferential wall 45 of the first pipe coupling 20 and the second pipe coupling 40 are made of a plastic that can be fused with itself, preferably of the same plastic as that of the pipe walls 5 of the pipe section 4, as specified herein above.

The coupling sleeve 60 comprises a cylindrical third circumferential wall 65 with a radius that is constant around the center line S. The third circumferential wall 65 has an outer diameter D7 that is equal to or smaller than the outer diameter of the raised abutment body 49 of the second pipe coupling 40, as is shown in figure 1B, since this ensures smooth jacking/pulling through a bore hole. The cylindrical wall 65 has a wall thickness W4 that is substantially constant over the length of the coupling sleeve 60 in the direction of the center line S.

The cylindrical wall 65 has a first internal screw thread 75 having multiple windings with a cross section that mates with the first external screw thread 35 of the first pipe coupling 1, and a second internal screw thread 76 having multiple windings with a cross section that mates with the second external screw thread 55 of the second pipe coupling 2. The windings have a trapezoidal cross section as is shown in figure 3B, but may also have any other cross section, forming for example a square or buttress screw thread, provided that the internal screw threads 75 and 76 are complementary with the external screw threads 35 and 55 respectively. The first internal screw thread 75 and the second internal screw thread 76 merge into each other to form one continuous internal screw thread, *i.e.* without interruptions of the coupling sleeve 60.

The coupling sleeve 60 comprises one or more tool provisions to attach tools thereon and which do not extend beyond the outer diameter D7 of the coupling sleeve 60. These are in this example elongate blind grooves 69 in the third circumferential wall 65 that extend in the direction of the center line S. The elongate blind grooves 69 are placed in rows extending in the circumferential direction of the coupling sleeve 60 and are spaced apart in the circumferential direction of the coupling sleeve 60 This allows easy connection with a hook wrench, or a mechanized equivalent thereof.

The third circumferential wall 65 of the coupling sleeve 60 is made of a plastic or plastic composite. In the embodiment shown in the figures, this is a different material as that of the circumferential walls 25, 45 of the pipe couplings 20, 40. Alternatively the third circumferential wall 65 of the coupling sleeve 60 is made from the same plastic as that of the first circumferential wall 25 and the second circumferential wall 45.

The pipes comprised in the pipe string have a typical outer diameter D1 of at least 200 millimeters. Moreover, the pipes comprised in the pipe string have an inner diameter D2 and wall thickness W1 such that they comply with the norm EN12201-2:2011.

In alternative embodiments of the invention the pipes comprised in the pipe string have an external diameter of 150-300 millimeters and a wall thickness of at least 15 millimeters, such as having an external diameter of about 200 millimeters and a wall thickness of at least about 180 millimeters, or such as having an external diameter of about 250 millimeters and a wall thickness of at least about 220 millimeters.

Although not shown, the first pipe and second pipe each may comprise several sub-pipes fused to each other. The sub-pipes comprised in the first and second pipe may be welded to each other to form the first and second pipe respectively. For example, the first and second pipe each comprise multiple sub-pipes fused to each other to a total length of more than 50m, or even more than 100m.

As will be understood by the skilled person in the context of the present invention, the pipe string described herein may comprise multiple, such as two, three, four or more pipe coupling assemblies as described herein such that typically the pipe string will have a length of more than 200m, typically up to about 2000 meters.

The present inventors have found that the present technology allows the provision of a pipe string which is easy to assemble and has enough tensile strength to resist the jacking/pulling forces during trenchless installation. Hence, the tensile strength of the pipe string determined at the position of the connection assembly is preferably more than the tensile strength of each of the pipes 1 and 2. The tensile strength of the pipe string determined at the position of the connection assembly is preferably such that it can withstand a pull force of more than 100 kN, preferably more than 250 kN, more preferably more than 500 kN without breaking or disconnecting the assembly.

The pipe string as described above is configured for trenchless installation, wherein the installation method comprises the following steps. The plastic pipes 1, 2 are provided on an installation site. At the installation site, the plastic pipes 1, 2 may be formed by welding multiple shorter sub-pipes in series to each other. The sub-pipes have for example a length of 20 meters to form a pipe 1, 2 of 150-200 meters. At the pipe end sections 4 of each pipe 1, 2, a first pipe coupling 20 and a second pipe coupling 40 are welded thereon. This is performed by providing a beveled edge 27, 47 on the ends of the first and second pipe couplings 20, 40, and aligning the ends of the pipe end sections 4 with the first pipe coupling 20 and the second pipe coupling 40, respectively, where after a weld 90 is applied along the beveled edge 27, 47 and the corresponding beveled edge 6 on the ends of the pipe end sections 4. The weld 90 merges in the plastics of the circumferential walls 25, 45 of the pipe couplings 20, 40 and the pipe wall 5 of the pipe end section 4. The first and second pipe couplings 20, 40 are provided at the meeting ends of the pipes 1, 2, wherein the first pipe coupling 20 is provided at the leading end of the pipe 1.

Subsequently, the second pipe 2 is placed into a pre-formed underground cavity by jacking or pulling, wherein the abutment body 49 with oblique outer surface 50 may minimize ground resistance during placing. The pre-formed underground cavity is a substantially horizontal bore channel obtained by directional boring or horizontal directional drilling. When the second pipe 2 is placed within the underground cavity, preferably such that the second pipe coupling 40 is placed outside the underground cavity, the coupling sleeve 60 is screwed over its entire length onto the first pipe coupling 20. The following step comprising placing the first pipe 1 with the first pipe coupling 20 against the second pipe 2, wherein the second pipe coupling 40 and the first pipe coupling 20 are placed against each other. Thereafter, the coupling sleeve 60 is screwed back partially onto the second pipe coupling 40 from the first pipe coupling 20 until the coupling sleeve 60 abuts against the distal abutment surface 51 thereof. As a result, the distal insert reduction 56 is fully received in the receiving rabbet 39. When the first and second pipe 1, 2 are coupled to each other and the pipe string is formed, the pipe string is advanced further into the underground cavity by jacking or pulling till the first pipe 1 is placed within the underground cavity.

Optionally, the trailing end of the first pipe 1 may be provided with a further second pipe coupling 40, such that a further pipe having a further first pipe coupling 20 may be coupled to the first pipe 1 as described above.

It is to be understood that the above description is included to illustrate the operation of the preferred embodiments and is not meant to limit the scope of the invention. From the above discussion, many variations will be apparent to one skilled in the art that would yet be encompassed by the scope of the present invention as defined by the claims.

## Claims

1. Pipe string for trenchless installation, comprising a first pipe (1) and a second pipe (2) which are coupled to each other by means of a pipe coupling assembly (10),
wherein the first pipe (1) comprises a first pipe end section (4) that is connected with a first pipe coupling (20) of the pipe coupling assembly (10), and wherein the second pipe (2) comprises a second pipe end section (4) that is connected with a second pipe coupling (40) of the pipe coupling assembly (10),
wherein the first pipe coupling (20) comprises a plastic first circumferential wall (25) that is provided with a first external screw tread (35), and wherein the second pipe coupling (40) comprises a plastic second circumferential wall (45) that is provided with a second external screw thread (55),
wherein the pipe coupling assembly (10) comprises a coupling sleeve (60) for coupling the first pipe coupling (20) with the second pipe coupling (40),
wherein the coupling sleeve (60) comprises a third circumferential wall (65) that is provided with a first internal screw thread (75) that mates with the first external screw thread (35) of the first pipe coupling (20), and a second internal screw thread (76) that mates with the second external screw thread (55) of the second pipe coupling (40), and
wherein the first pipe coupling (20) has a first length and the coupling sleeve (60) has a second length, **characterized in that** the first length is equal to or larger than the second length and the coupling sleeve (60) is enabled to be screwed onto the first pipe coupling (20), wherein the coupling sleeve (60) is enabled to be screwed onto the first pipe coupling (20) over the entire length of the coupling sleeve (60).

2. Pipe string according to claim **1,** wherein the first and second circumferential walls (25, 45) of the first and second pipe couplings (20, 40) are made of a plastic that can be fused with itself, preferably PVC or a polyolefin, more preferably PVC, PE or PP, preferably wherein the first and second circumferential walls (25, 45) of the first and second pipe couplings (20, 40) are made of HDPE, preferably PE-80 or PE-100, most preferably PE-100.

3. Pipe string according to claim 1 or 2, wherein the third circumferential wall (65) of the coupling sleeve (60) is made of the same plastic as the first circumferential wall (25) and/or the second circumferential wall (45).

4. Pipe string according to any one of the claims 1-2, wherein the third circumferential wall (65) of the coupling sleeve (60) is made of a different material than the first and/or the second circumferential walls (25, 450 of the first and second pipe couplings (20, 40), preferably wherein the third circumferential wall (65) is made of a plastic, plastic composite material or plastic reinforced with a composite layer, more preferably wherein the third circumferential wall (65) is made of a plastic composite material comprising fibers embedded in a polymer matrix, preferably wherein the fibers are selected from a group comprising glass, carbon, aramid, basalt, paper, wood and coconut, and the polymer matrix is selected from the group comprising epoxy, vinyl ester, polyester, polyolefin and polyamide, or more preferably wherein the third circumferential wall is made of polyamide (PA), polyvinylchloride (PVC) or a polyolefin, preferably PA or polyethylene (PE), in particular PE-100, PE-80 or PA-6.

5. Pipe string according to any one of the preceding claims, wherein the first and second pipe end sections (4) comprise a plastic circumferential wall made of a plastic that can be fused with itself, preferably PVC or a polyolefin, more preferably PVC, PE or PP, preferably wherein the plastic circumferential wall of the first and second pipe end sections is made of HDPE, preferably PE-80 or PE-100, most preferably PE-100.

6. Pipe string according to claim 5, wherein the first and second pipe end sections (4) are fused to the first and second pipe couplings (20, 40) respectively, preferably wherein the first pipe end section (4) is welded to the first pipe coupling (20), and wherein the second pipe end section (4) is welded to the second pipe coupling (40).

7. Pipe string according to any one of the claims 5-6, wherein the first and/or second pipe (1, 2) comprise one or more sub-pipes fused, preferably welded, to each other in order to form the first and/or second pipe (1, 2).

8. Pipe string according to any one of the preceding claims, wherein the first internal screw thread (75) continues, in particular substantially uninterrupted, into the second internal screw thread (76).

9. Pipe string according to any one of the preceding claims, wherein the second pipe coupling (40) comprises an abutment body (49) that extends around the second circumferential wall (45), wherein the abutment body comprises a distal abutment surface (51) that faces the coupling sleeve (60) and that is in abutment therewith.

10. Pipe string according to claim 9, wherein the abutment body (49) comprises an oblique outer surface (50) that tapers in a direction away from the coupling sleeve (60).

11. Pipe string according to claim 9 or claim 10, wherein the second pipe (2) has an outer diameter and wherein the outer diameter of the abutment body (49) is at most 120% of the outer diameter of the second pipe (2).

12. Pipe string according to any one of the preceding claims, wherein the tensile strength of the pipe string determined at the position of the pipe coupling assembly (10) is such that it can withstand a pull force of more than 100 kN, preferably more than 250 kN, more preferably more than 500 kN without breaking or disconnecting the assembly, and/or
wherein the pipe coupling assembly (10) comprises one or more rubber seals, preferably a rubber seal placed such that when the pipe coupling is assembled, a seal is obtained which is water-tight at an internal water pressure of at least 2 bar.

13. Method for trenchless installation of a pipe string, the method comprising the steps of:
(i) providing a first plastic pipe (1) and a second plastic pipe (2);
(ii) placing one of the first plastic pipe (1) and the second plastic pipe (2) in a pre-formed underground cavity by jacking or pulling, preferably wherein the pre-formed underground cavity is a substantially horizontal bore channel obtained by directional boring or horizontal directional drilling
(iii) coupling another one of the first plastic pipe (1) and the second plastic pipe (2) to the one of the first plastic pipe (1) and the second plastic pipe (2) by means of a pipe coupling assembly (10), thereby forming a pipe string according to any one of the preceding claims; and
(iv) further advancing the pipe string in the pre-formed underground cavity by jacking or pulling, thereby achieving placement of the coupled second pipe (2) in the pre-formed underground cavity
**characterized by** step (iii) comprising the following steps:
screwing the coupling sleeve (60), over its entire length, onto the first pipe coupling (20);
placing the first plastic pipe (1) against the second plastic pipe (2), such that the first pipe coupling (20) is placed against the second pipe coupling (40); and
screwing the coupling sleeve (60) back partially onto the second pipe coupling (40) from the first pipe coupling (20), preferably wherein at least one of the first pipe (1) and the second pipe (2) has a length of more than 50m, or even more than 100m, and/or wherein at least one of the first pipe (1) and the second pipe (2) comprise multiple sub-pipes connected to each other in order to form the respective pipe.

## Patentansprüche

1. Rohrstrang zur grabenlosen Installation, umfassend ein erstes Rohr (1) und ein zweites Rohr (2), die mittels einer Rohrkupplungsanordnung (10) miteinander gekoppelt sind,
wobei das erste Rohr (1) einen ersten Rohrendabschnitt (4) umfasst, der mit einer ersten Rohrkupplung (20) der Rohrkupplungsanordnung (10) verbunden ist, und wobei das zweite Rohr (2) einen zweiten Rohrendabschnitt (4) umfasst, der mit einer zweiten Rohrkupplung (40) der Rohrkupplungsanordnung (10) verbunden ist,
wobei die erste Rohrkupplung (20) eine erste Umfangswand (25) aus Kunststoff umfasst, die mit einem ersten Außengewinde (35) versehen ist, und wobei die zweite Rohrkupplung (40) eine zweite Umfangswand (45) aus Kunststoff umfasst, die mit einem zweiten Außengewinde (55) versehen ist, wobei die Rohrkupplungsanordnung (10) eine Kupplungshülse (60) zum Koppeln der ersten Rohrkupplung (20) mit der zweiten Rohrkupplung (40) umfasst,
wobei die Kupplungshülse (60) eine dritte Umfangswand (65) umfasst, die mit einem ersten Innengewinde (75), das mit dem ersten Außengewinde (35) der ersten Rohrkupplung (20) zusammenpasst, und einem zweiten Innengewinde (76), das mit dem zweiten Außengewinde (55) der zweiten Rohrkupplung (40) zusammenpasst, versehen ist, und
wobei die erste Rohrkupplung (20) eine erste Länge aufweist und die Kupplungshülse (60) eine zweite Länge aufweist, **dadurch gekennzeichnet, dass** die erste Länge gleich der oder größer als die zweite Länge ist und die Kupplungshülse (60) auf die erste Rohrkupplung (20) aufschraubbar ist, wobei die Kupplungshülse (60) über die gesamte Länge der Kupplungshülse (60) auf die erste Rohrkupplung (20) aufschraubbar ist.

2. Rohrstrang nach Anspruch 1, wobei die erste und die zweite Umfangswand (25, 45) der ersten und der zweiten Rohrkupplung (20, 40) aus einem Kunststoff hergestellt sind, der mit sich selbst verschmolzen werden kann, vorzugsweise PVC oder ein Polyolefin, bevorzugter PVC, PE oder PP, wobei vorzugsweise die erste und die zweite Umfangswand (25, 45) der ersten und der zweiten Rohrkupplung (20, 40) aus HDPE hergestellt sind, vorzugsweise PE-80 oder PE-100, höchstvorzugsweise PE-100.

3. Rohrstrang nach Anspruch 1 oder 2, wobei die dritte Umfangswand (65) der Kupplungshülse (60) aus demselben Kunststoff wie die erste Umfangswand (25) und/oder die zweite Umfangswand (45) hergestellt ist.

4. Rohrstrang nach einem der Ansprüche 1-2, wobei die dritte Umfangswand (65) der Kupplungshülse (60) aus einem anderen Material als die erste und/oder die zweite Umfangswand (25, 45) der ersten und der zweiten Rohrkupplung (20, 40) hergestellt ist, wobei vorzugsweise die dritte Umfangswand (65) aus einem Kunststoff, einem Kunststoffverbundmaterial oder einem mit einer Verbundschicht verstärkten Kunststoff hergestellt ist, wobei bevorzugter die dritte Umfangswand (65) aus einem Kunststoffverbundmaterial hergestellt ist, das in eine Polymermatrix eingebettete Fasern umfasst, wobei vorzugsweise die Fasern aus einer Gruppe ausgewählt sind, die Glas, Kohlenstoff, Aramid, Basalt, Papier, Holz und Kokos umfasst, und die Polymermatrix aus der Gruppe ausgewählt ist, die Epoxid, Vinylester, Polyester, Polyolefin und Polyamid umfasst, oder wobei noch bevorzugter die dritte Umfangswand aus Polyamid (PA), Polyvinylchlorid (PVC) oder einem Polyolefin, vorzugsweise PA oder Polyethylen (PE), insbesondere PE-100, PE-80 oder PA-6, hergestellt ist.

5. Rohrstrang nach einem der vorhergehenden Ansprüche, wobei die ersten und zweiten Rohrendabschnitte (4) eine Kunststoffumfangswand umfassen, die aus einem Kunststoff hergestellt ist, der mit sich selbst verschmolzen werden kann, vorzugsweise PVC oder ein Polyolefin, bevorzugter PVC, PE oder PP, wobei vorzugsweise die Kunststoffumfangswand der ersten und zweiten Rohrendabschnitte aus HDPE, vorzugsweise PE-80 oder PE-100, höchstvorzugsweise PE-100, hergestellt ist.

6. Rohrstrang nach Anspruch 5, wobei die ersten und zweiten Rohrendabschnitte (4) jeweils mit der ersten und der zweiten Rohrkupplung (20, 40) verschmolzen sind, wobei vorzugsweise der erste Rohrendabschnitt (4) mit der ersten Rohrkupplung (20) verschweißt ist und wobei der zweite Rohrendabschnitt (4) mit der zweiten Rohrkupplung (40) verschweißt ist.

7. Rohrstrang nach einem der Ansprüche 5-6, wobei das erste und/oder zweite Rohr (1, 2) ein oder mehrere Teilrohre umfasst, die miteinander verschmolzen, vorzugsweise verschweißt, sind, um das erste und/oder zweite Rohr (1, 2) zu bilden.

8. Rohrstrang nach einem der vorhergehenden Ansprüche, wobei sich das erste Innengewinde (75), insbesondere im Wesentlichen ununterbrochen, in das zweite Innengewinde (76) fortsetzt.

9. Rohrstrang nach einem der vorhergehenden Ansprüche, wobei die zweite Rohrkupplung (40) einen Anschlagkörper (49) umfasst, der sich um die zweite Umfangswand (45) erstreckt, wobei der Anschlagkörper eine distale Anschlagfläche (51) umfasst, die der Kupplungshülse (60) zugewandt ist und an dieser anliegt.

10. Rohrstrang nach Anspruch 9, wobei der Anschlagkörper (49) eine schräge Außenfläche (50) umfasst, die sich in einer Richtung weg von der Kupplungshülse (60) verjüngt.

11. Rohrstrang nach Anspruch 9 oder Anspruch 10, wobei das zweite Rohr (2) einen Außendurchmesser aufweist und wobei der Außendurchmesser des Anschlagkörpers (49) höchstens 120 % des Außendurchmessers des zweiten Rohrs (2) beträgt.

12. Rohrstrang nach einem der vorhergehenden Ansprüche, wobei die an der Position der Rohrkupplungsanordnung (10) bestimmte Zugfestigkeit des Rohrstrangs derart ist, dass er einer Zugkraft von mehr als 100 kN, vorzugsweise mehr als 250 kN, bevorzugter mehr als 500 kN, standhalten kann, ohne die Anordnung zu brechen oder zu trennen, und/oder wobei die Rohrkupplungsanordnung (10) eine oder mehrere Gummidichtungen umfasst, vorzugsweise eine Gummidichtung, die derart angeordnet ist, dass, wenn die Rohrkupplung montiert ist, eine Dichtung erhalten wird, die bei einem inneren Wasserdruck von mindestens 2 bar wasserdicht ist.

13. Verfahren zur grabenlosen Installation eines Rohrstrangs, wobei das Verfahren die folgenden Schritte umfasst:
(i) Bereitstellen eines ersten Kunststoffrohrs (1) und eines zweiten Kunststoffrohrs (2);
(ii) Anordnen eines von dem ersten Kunststoffrohr (1) und dem zweiten Kunststoffrohr (2) in einem vorgeformten unterirdischen Hohlraum durch Vorpressen oder Ziehen, wobei vorzugsweise der vorgeformte unterirdische Hohlraum ein im Wesentlichen horizontaler Bohrkanal ist, der durch Richtbohren oder horizontales Richtbohren erhalten wird;
(iii) Koppeln eines anderen von dem ersten Kunststoffrohr (1) und dem zweiten Kunststoffrohr (2) mit dem einen von dem ersten Kunststoffrohr (1) und dem zweiten Kunststoffrohr (2) mittels einer Rohrkupplungsanordnung (10), wodurch ein Rohrstrang nach einem der vorhergehenden Ansprüche gebildet wird; und
(iv) weiteres Vorschieben des Rohrstrangs in dem vorgeformten unterirdischen Hohlraum durch Vorpressen oder Ziehen, wodurch die Anordnung des gekoppelten zweiten Rohrs (2) in dem vorgeformten unterirdischen Hohlraum erreicht wird, **dadurch gekennzeichnet, dass** Schritt (iii) die folgenden Schritte umfasst:
Aufschrauben der Kupplungshülse (60) über ihre gesamte Länge auf die erste Rohrkupplung (20); Anordnen des ersten Kunststoffrohrs (1) gegen das zweite Kunststoffrohr (2), sodass die erste Rohrkupplung (20) gegen die zweite Rohrkupplung (40) angeordnet ist; und
teilweises Zurückschrauben der Kupplungshülse (60) von der ersten Rohrkupplung (20) auf die zweite Rohrkupplung (40), wobei vorzugsweise mindestens eines von dem ersten Rohr (1) und dem zweiten Rohr (2) eine Länge von mehr als 50 m oder sogar mehr als 100 m aufweist und/oder wobei mindestens eines von dem ersten Rohr (1) und dem zweiten Rohr (2) mehrere miteinander verbundene Teilrohre umfasst, um das jeweilige Rohr zu bilden.

## Revendications

1. Colonne de tuyaux pour une installation sans tranchée, comprenant un premier tuyau (1) et un second tuyau (2) qui sont accouplés l'un à l'autre au moyen d'un ensemble d'accouplement de tuyaux (10),
dans laquelle le premier tuyau (1) comprend une première section d'extrémité de tuyau (4) qui est raccordée à un premier raccord de tuyau (20) de l'ensemble d'accouplement de tuyaux (10), et dans laquelle le second tuyau (2) comprend une seconde section d'extrémité de tuyau (4) qui est raccordée à un second raccord de tuyau (40) de l'ensemble d'accouplement de tuyaux (10),
dans laquelle le premier raccord de tuyau (20) comprend une première paroi circonférentielle en plastique (25) qui est pourvue d'un premier filetage externe (35), et dans laquelle le second raccord de tuyau (40) comprend une seconde paroi circonférentielle en plastique (45) qui est pourvue d'un second filetage externe (55),
dans laquelle l'ensemble d'accouplement de tuyaux (10) comprend un manchon d'accouplement (60) destiné à accoupler le premier raccord de tuyau (20) au second raccord de tuyau (40),
dans laquelle le manchon d'accouplement (60) comprend une troisième paroi circonférentielle (65) qui est pourvue d'un premier filetage interne (75) qui coopère avec le premier filetage externe (35) du premier raccord de tuyau (20), et d'un second filetage interne (76) qui coopère avec le second filetage externe (55) du second raccord de tuyau (40), et
dans laquelle le premier raccord de tuyau (20) présente une première longueur et le manchon d'accouplement (60) présente une seconde longueur, **caractérisé en ce que** la première longueur est égale ou supérieure à la seconde longueur et le manchon d'accouplement (60) est apte à être vissé sur le premier raccord de tuyau (20), dans lequel le manchon d'accouplement (60) est apte à être vissé sur le premier raccord de tuyau (20) sur toute la longueur du manchon d'accouplement (60).

2. Colonne de tuyaux selon la revendication 1, dans laquelle les première et seconde parois circonférentielles (25, 45) des premier et second raccords de tuyau (20, 40) sont constituées d'un plastique qui peut être fusionné avec lui-même, de préférence du PVC ou une polyoléfine, plus préférablement du PVC, du PE ou du PP, de préférence dans laquelle les première et seconde parois circonférentielles (25, 45) des premier et second raccords de tuyau (20, 40) sont constituées de HDPE, de préférence de PE-80 ou de PE-100, le plus préférablement de PE-100.

3. Colonne de tuyaux selon la revendication 1 ou 2, dans laquelle la troisième paroi circonférentielle (65) du manchon d'accouplement (60) est constituée du même plastique que la première paroi circonférentielle (25) et/ou la seconde paroi circonférentielle (45).

4. Colonne de tuyaux selon l'une quelconque des revendications 1-2, dans laquelle la troisième paroi circonférentielle (65) du manchon d'accouplement (60) est constituée d'un matériau différent de celui des première et/ou seconde parois circonférentielles (25, 45) des premier et second raccords de tuyau (20, 40), de préférence dans laquelle la troisième paroi circonférentielle (65) est constituée d'un plastique, d'un matériau composite plastique ou d'un plastique renforcé par une couche composite, plus préférablement dans laquelle la troisième paroi circonférentielle (65) est constituée d'un matériau composite plastique comprenant des fibres incorporées dans une matrice polymère, de préférence dans laquelle les fibres sont sélectionnées dans un groupe comprenant le verre, le carbone, l'aramide, le basalte, le papier, le bois et la noix de coco, et la matrice polymère est sélectionnée dans le groupe comprenant l'époxy, l'ester vinylique, le polyester, la polyoléfine et le polyamide, ou encore plus préférablement dans laquelle la troisième paroi circonférentielle est constituée de polyamide (PA), de polychlorure de vinyle (PVC) ou d'une polyoléfine, de préférence de PA ou de polyéthylène (PE), en particulier de PE-100, de PE-80 ou de PA-6.

5. Colonne de tuyaux selon l'une quelconque des revendications précédentes, dans laquelle les première et seconde sections d'extrémité de tuyau (4) comprennent une paroi circonférentielle en plastique constituée d'un plastique qui peut être fusionné avec lui-même, de préférence du PVC ou une polyoléfine, plus préférablement du PVC, du PE ou du PP, de préférence dans laquelle la paroi circonférentielle en plastique des première et seconde sections d'extrémité de tuyau est constituée de HDPE, de préférence de PE-80 ou de PE-100, le plus préférablement de PE-100.

6. Colonne de tuyaux selon la revendication 5, dans laquelle les première et seconde sections d'extrémité de tuyau (4) sont fusionnées respectivement aux premier et second raccords de tuyau (20, 40), de préférence dans laquelle la première section d'extrémité de tuyau (4) est soudée au premier raccord de tuyau (20), et dans laquelle la seconde section d'extrémité de tuyau (4) est soudée au second raccord de tuyau (40).

7. Colonne de tuyaux selon l'une quelconque des revendications 5-6, dans laquelle le premier et/ou le second tuyau (1, 2) comprennent un ou plusieurs tronçons des tuyau fusionnés, de préférence soudés, l'un à l'autre afin de former le premier et/ou le second tuyau (1, 2).

8. Colonne de tuyaux selon l'une quelconque des revendications précédentes, dans laquelle le premier filetage interne (75) se poursuit, en particulier de manière sensiblement ininterrompue, dans le second filetage interne (76).

9. Colonne de tuyaux selon l'une quelconque des revendications précédentes, dans laquelle le second raccord de tuyau (40) comprend un corps de butée (49) qui s'étend autour de la seconde paroi circonférentielle (45), dans lequel le corps de butée comprend une surface de butée distale (51) qui fait face au manchon d'accouplement (60) et qui est en butée contre celui-ci.

10. Colonne de tuyaux selon la revendication 9, dans laquelle le corps de butée (49) comprend une surface extérieure oblique (50) qui s'amincit dans une direction s'éloignant du manchon d'accouplement (60).

11. Colonne de tuyaux selon la revendication 9 ou la revendication 10, dans laquelle le second tuyau (2) présente un diamètre extérieur et dans laquelle le diamètre extérieur du corps de butée (49) est au plus égal à 120 % du diamètre extérieur du second tuyau (2).

12. Colonne de tuyaux selon l'une quelconque des revendications précédentes, dans laquelle la résistance à la traction de la colonne de tuyaux déterminée à la position de l'ensemble d'accouplement de tuyaux (10) est telle qu'il peut résister à une force de traction de plus de 100 kN, de préférence de plus de 250 kN, plus préférablement de plus de 500 kN, sans rompre ni désaccoupler l'ensemble, et/ou
dans laquelle l'ensemble d'accouplement de tuyaux (10) comprend un ou plusieurs joints en caoutchouc, de préférence un joint en caoutchouc placé de telle sorte que, lorsque le raccord de tuyau est assemblé, une étanchéité à l'eau est obtenue à une pression interne d'au moins 2 bar.

13. Procédé d'installation sans tranchée d'une colonne de tuyaux, le procédé comprenant les étapes consistant à :
(i) fournir un premier tuyau en plastique (1) et un second tuyau en plastique (2);
(ii) placer l'un du premier tuyau en plastique (1) et du second tuyau en plastique (2) dans une cavité souterraine préformée par fonçage ou traction, de préférence dans lequel la cavité souterraine préformée est un canal de forage sensiblement horizontal obtenu par forage dirigé ou forage directionnel horizontal;
(iii) accoupler l'autre du premier tuyau en plastique (1) et du second tuyau en plastique (2) à celui du premier tuyau en plastique (1) et du second tuyau en plastique (2) au moyen d'un ensemble d'accouplement de tuyaux (10), formant ainsi une colonne de tuyaux selon l'une quelconque des revendications précédentes ; et
(iv) faire avancer davantage la colonne de tuyaux dans la cavité souterraine préformée par fonçage ou traction, réalisant ainsi le placement du second tuyau accouplé (2) dans la cavité souterraine préformée,
**caractérisé en ce que** l'étape (iii) comprend les étapes suivantes :
visser le manchon d'accouplement (60), sur toute sa longueur, sur le premier raccord de tuyau (20);
placer le premier tuyau en plastique (1) contre le second tuyau en plastique (2), de telle sorte que le premier raccord de tuyau (20) soit placé contre le second raccord de tuyau (40); et
revisser partiellement le manchon d'accouplement (60) sur le second raccord de tuyau (40) à partir du premier raccord de tuyau (20), de préférence dans lequel au moins l'un du premier tuyau (1) et du second tuyau (2) présente une longueur supérieure à 50 m, voire supérieure à 100 m, et/ou dans lequel au moins l'un du premier tuyau (1) et du second tuyau (2) comprend de multiples tronçons de tuyau raccordés les uns aux autres afin de former le tuyau respectif.
